# FASCICULE DE BREVET EUROPEEN

(11) **EP 2 465 743 B1**
(45) Date de publication et mention de la délivrance du brevet: **12.06.2013**
(21) Numéro de dépôt: 11194139.9
(22) Date de dépôt: 16.12.2011
(51) Int. Cl.: B60T 13/16, B60T 15/36

(54) **Valve de freinage améliorée**
Verbessertes Bremsventil
Improved brake valve

(30) Priorité: 20.12.2010 FR 1060850
(43) Date de publication de la demande: 20.06.2012
(73) Titulaire: Poclain Hydraulics Industrie, 60410 Verberie (FR)
(72) Inventeur: Costaz, Dominique, 60410 VERBERIE (FR); Roger, Fabien, 60410 VERBERIE (FR)
(74) Mandataire: Regimbeau

(56) Documents cités:
- DE-B3-102005 019 479
- FR-A1- 2 897 580

## Description

### DOMAINE TECHNIQUE GENERAL

La présente invention concerne les valves hydrauliques pour les systèmes de freinage, typiquement pour les systèmes de freinage de remorques ayant un frein de parking à l'arrêt.

### ETAT DE L'ART

De nombreux véhicules ou machines sont munis de systèmes de freinage ayant un frein de parking à l'arrêt, ce frein de parking étant neutralisé du fait de l'application d'une pression lorsque ces véhicules ou machines sont en marche. Un tel dispositif de freinage est connu de FR 2 897 580.

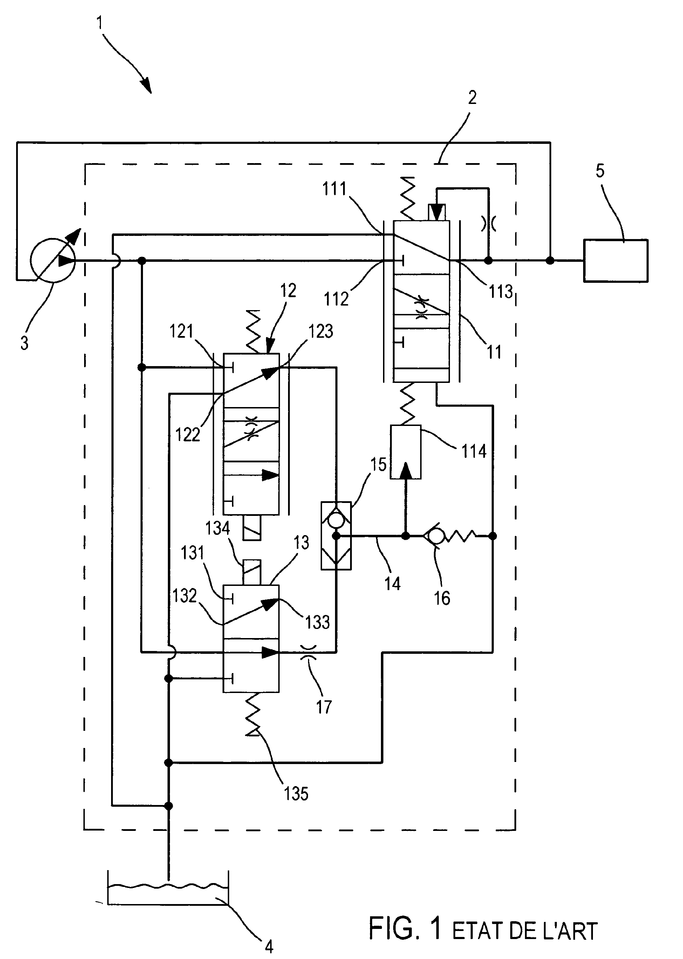

La figure 1 illustre un circuit de freinage 1 comprenant une valve de freinage 2 selon l'état de l'art.

La valve de freinage 2 est reliée par un orifice d'entrée à une pompe hydraulique 3 asservie à la charge, par un orifice de fuite à un réservoir 4 à pression ambiante, et par un orifice de sortie à des moyens de freinage 5.
L'asservissement de la pompe hydraulique 3 à la charge est réalisé via une ligne de charge prélevant la pression au niveau de l'orifice de sortie de la valve de freinage 2 et pilotant ainsi un plateau de cylindrée de la pompe hydraulique 3.

La valve de freinage 2 telle qu'illustrée comprend :
- un distributeur d'alimentation 11 proportionnel, comprenant :
   o un premier orifice 111 relié à l'orifice de fuite de la valve de freinage 2,
   o un deuxième orifice 112 relié à l'orifice d'entrée de la valve de freinage 2,
   o un troisième orifice 113 relié à l'orifice de sortie de la valve de freinage 2 ;
      ledit distributeur d'alimentation 11 étant piloté via des moyens de commande,
- un réducteur proportionnel 12 présentant :
   o un premier orifice 121, relié à l'orifice d'entrée de la valve de freinage 2,
   o un deuxième orifice 122, relié à l'orifice de fuite de la valve de freinage 2,
   o un troisième orifice 123, relié à une ligne de tarage 14 via une première entrée d'un clapet navette 15 ;
- un commutateur 13 présentant :
   o un premier orifice 131, relié à l'orifice d'entrée de la valve de freinage 2,
   o un deuxième orifice 132, relié à l'orifice de fuite de la valve de freinage 2,
   o un troisième orifice 133, relié à une ligne de tarage 14 via une seconde entrée du clapet navette 15.

Le clapet navette 15 permet que seule la pression la plus élevée parmi la pression aux troisièmes orifices 123 et 133 alimente ladite ligne de tarage 14, le troisième orifice 133 du commutateur 13 étant relié au clapet navette 15 via un limiteur de débit 17.

La ligne de tarage 14 est de plus reliée d'une part à un moyen de tarage 114 du distributeur d'alimentation 11, et d'autre part à la fois à l'orifice de fuite de la valve de freinage 2 et à un moyen de drainage du distributeur d'alimentation 11 via un clapet de non retour avec ressort 16. Ainsi, si la pression dans la ligne de tarage 14 est trop élevée, le clapet de non retour avec ressort 16 s'ouvre, et permet d'évacuer de la pression vers l'orifice de fuite de la valve de freinage, et donc typiquement vers le réservoir 4.
Le moyen de tarage 114 est composé d'un moyen de tarage hydraulique qui tare un ressort de poussée ; lorsque ce moyen de tarage 114 est relâché, le tarage est nul.

Le distributeur d'alimentation 11 présente trois configurations :
- une configuration de repos, dans laquelle son troisième orifice 113 est relié à son premier orifice 111 et son deuxième orifice 112 est fermé, ce qui, dans le circuit représenté sur la figure 1, relie les moyens de freinage 5 au réservoir 4 ;
- une configuration de tarage, dans laquelle le premier orifice 111 et le second orifice 112 sont tous deux reliés au troisième orifice 113 via des limiteurs de débit,
- une configuration de freinage, dans laquelle son premier orifice 111 est fermé, tandis que son second orifice 112 est relié à son troisième orifice 113.

Le réducteur proportionnel 12 présente trois configurations :
- une configuration de freinage dans laquelle le premier orifice 121 est relié au troisième orifice 123 tandis que le deuxième orifice 122 est fermé,
- une configuration de tarage dans laquelle le premier orifice 121 et le second orifice 122 sont tous deux reliés au troisième orifice 123 via des limiteurs de débit,
- une configuration de repos, dans laquelle le premier orifice 121 est fermé, tandis que le deuxième orifice 122 est relié au troisième orifice 123.

Le commutateur 13 présente deux configurations :
- une configuration de freinage dans laquelle le premier orifice 131 est relié au troisième orifice 133 tandis que le deuxième orifice 132 est fermé,
- une configuration de marche, dans laquelle le premier orifice 131 est fermé, tandis que le deuxième orifice 132 est relié au troisième orifice 133.

Le commutateur 13 est un commutateur « on/off », qui joue le rôle d'organe de sécurité du circuit. Par défaut, ce commutateur 13 est en position de freinage, et passe en configuration de marche lorsqu'il est piloté via un moyen de pilotage électrique 134. En cas de défaillance électrique du système, le commutateur passe alors en configuration de freinage sous l'effet d'un moyen élastique 135, qui va ainsi conduire le débit de la pompe 3 directement au moyen de tarage 114, ce qui va conduire à l'alimentation en pression le moyen de freinage 5.

Par défaut, le distributeur d'alimentation 11 et le réducteur proportionnel 12 sont en configuration de repos.
En fonctionnement, le réducteur proportionnel 12 est basculé dans vers sa configuration de tarage. Le réducteur proportionnel 12 est piloté de manière transmettre une pression donnée au moyen de tarage 114, qui va ainsi piloter le distributeur d'alimentation 11 et le basculer vers sa configuration de tarage.
La pompe 3 alimente en pression la valve de freinage 2 via son orifice d'entrée, qui va ainsi transmettre aux moyens de freinage 5 une pression déterminée par le tarage réalisé par le moyen de tarage 114. Dans les circuits actuels, un rapport de l'ordre de 9 est appliqué entre la pression transmise par le réducteur proportionnel 12 et la pression délivrée aux moyens de freinage 5 par le distributeur d'alimentation 11.

Ce circuit de freinage selon l'état de l'art présente plusieurs inconvénients auxquels l'invention se propose de remédier.
En effet, le ratio important entre la pression de freinage et la pression de pilotage exercée sur le distributeur d'alimentation 11 via le réducteur proportionnel 12 implique que les écarts de la pression de pilotage sont multipliés par ce même ratio et vont donc impacter fortement la pression de freinage.

De plus, l'alimentation est réalisée par une pompe asservie à a charge, qui délivre donc une pression très variable.

En outre, dans le cas de normes nationales spécifiques telle que la norme Italienne, la pression de frein doit être régulée à sensiblement 12.5 bar, ce que ce circuit ne permet pas de réaliser convenablement. Il est donc nécessaire d'adapter spécifiquement la valve de freinage selon sa destination, ce qui est particulièrement contraignant au niveau de la production.

### PRESENTATION DE L'INVENTION

La présente invention vise à présenter une valve de freinage et un circuit hydraulique de freinage ne présentant pas ces inconvénients.

Selon un premier aspect, la présente invention concerne une valve de freinage hydraulique comprenant :
- un orifice d'entrée destiné à être relié à un moyen d'alimentation en pression,
- un orifice de sortie destiné à être relié à un moyen de freinage,
- un orifice de fuite destiné à être relié à un réservoir,
- un distributeur d'alimentation adapté pour relier l'orifice d'entrée à l'orifice de sortie dans une configuration de freinage, et l'orifice de fuite à l'orifice de sortie dans une configuration de repos,
ladite valve de freinage étant caractérisée en ce que le distributeur d'alimentation est piloté par deux moyens de tarage pilotés indépendamment.

Cette valve de freinage peut présenter une ou plusieurs des caractéristiques suivantes, prises indépendamment ou en combinaison :
- les moyens de tarage comprennent :
   i. un premier moyen de tarage réalisant un tarage fin pour une pression au niveau de l'orifice de sortie comprise entre 10 et 15 bar,
   ii. un second moyen de tarage réalisant un tarage pour une pression au niveau de l'orifice de sortie comprise entre 0 et 140 bar ;
- seul celui desdits moyens de tarage délivrant la pression de tarage la plus élevée pilote le distributeur d'alimentation ;
- le distributeur d'alimentation est piloté par une pression de tarage d'alimentation correspondant à la somme de la pression de tarage délivrée par le premier et le second moyen de tarage ;
- les premier et second moyens de tarage sont des réducteurs proportionnels montés en parallèle ;
- le premier moyen de tarage est un réducteur proportionnel, et en ce que ledit second moyen de tarage est un limiteur de pression ;
- le premier moyen de tarage est un ressort comprimé par un piston hydraulique, et en ce que ledit second moyen de tarage est un limiteur de pression ;
- le tarage est réalisé avec un rapport de 1: 1 entre la pression de tarage du distributeur d'alimentation (26) et la pression de l'orifice de sortie ; ou
- le premier moyen de tarage et le second moyen de tarage réalisent le tarage du distributeur d'alimentation respectivement avec un ratio égal à 1 et avec un ratio différent de 1.

Selon un second aspect, l'invention concerne également un circuit de freinage hydraulique comprenant :
- une valve de freinage telle que définie précédemment,
- une pompe hydraulique délivrant une pression variable connectée à l'orifice d'entrée de ladite valve,
- un réservoir à pression ambiante connecté à l'orifice de fuite de ladite valve,
- des moyens de freinage hydrauliques connecté à l'orifice de sortie de ladite valve.

Selon un troisième aspect, l'invention concerne également un véhicule équipé d'un circuit de freinage tel que défini précédemment.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- la figure 1, décrite précédemment, présente un circuit hydraulique comprenant une valve de freinage selon l'état de l'art ;
- la figure 2 présente un mode de réalisation d'un circuit hydraulique de freinage comprenant une valve selon l'invention ;
- la figure 3 présente une variante de circuit hydraulique comprenant une valve selon l'invention ;
- la figure 4 présente une autre variante de circuit hydraulique comprenant une valve selon l'invention,
- la figure 5 présente un autre mode de réalisation de circuit hydraulique comprenant une valve selon l'invention.

Sur l'ensemble des figures, les éléments identiques ou similaires sont indiqués par les mêmes références numériques.

### DESCRIPTION DETAILLEE

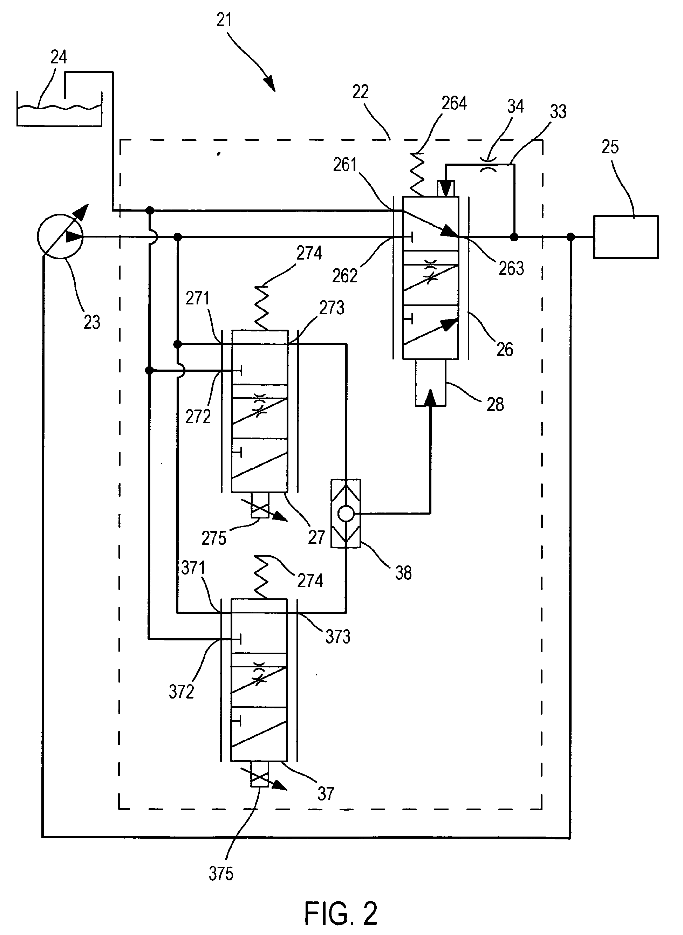

La figure 2 présente un circuit hydraulique 21 de freinage comprenant une valve de freinage 22 selon l'invention.

La valve de freinage 22 telle que représentée comprend :
- un orifice d'entrée relié à un moyen d'alimentation en pression 23, typiquement une pompe hydraulique asservie à la charge,
- un orifice de fuite relié à un réservoir 24, typiquement à pression ambiante,
- un orifice de sortie relié à des moyens de freinage 25.

De la même manière que dans le circuit représenté sur la figure 1, l'asservissement de la pompe hydraulique 23 à la charge est réalisé via une ligne de charge prélevant la pression au niveau de l'orifice de sortie de la valve de freinage 22 et pilotant ainsi un plateau de cylindrée de la pompe hydraulique 23.

La valve de freinage 22 comprend de plus :
- un distributeur d'alimentation 26 proportionnel présentant trois orifices :
   o un premier orifice 261 relié à l'orifice de fuite de la valve de freinage 22 ;
   o un deuxième orifice 262 relié à l'orifice d'entrée de la valve de freinage 22 ;
   o un troisième orifice 263 relié à l'orifice de sortie de la valve de freinage 22 ;
      ce distributeur d'alimentation 26 étant piloté par des moyens de tarage 28 agissant sur son tiroir de manière à alterner entre :
   o une configuration de repos dans laquelle le premier orifice 261 est relié au troisième orifice 263 tandis que le deuxième orifice 262 est fermé ;
   o une configuration de tarage dans laquelle le premier orifice 261 et le second orifice 262 sont tous deux reliés au troisième orifice 263 via des limiteurs de débit,
   o une configuration de freinage dans laquelle le premier orifice 261 est fermé tandis que le deuxième orifice 262 est relié au troisième orifice 263 ;
- un premier moyen de tarage composé d'un premier distributeur proportionnel 27 présentant trois orifices :
   o un premier orifice 271 relié à l'orifice d'entrée de la valve de freinage 2 ;
   o un deuxième orifice 272 relié à l'orifice de fuite de la valve de freinage 2 ;
   o un troisième orifice 273 relié à une première entrée d'un clapet navette 38,
   ce distributeur de pilotage 27 pouvant alterner entre :
   o une configuration de repos dans laquelle le premier orifice 271 est fermé tandis que le deuxième orifice 272 est relié au troisième orifice 273 ;
   o une configuration de tarage dans laquelle le premier orifice 271 et le second orifice 272 sont tous deux reliés au troisième orifice 273 via des limiteurs de débit,
   o une configuration de freinage dans laquelle le premier orifice 271 est relié au troisième orifice 273 tandis que le deuxième orifice 272 est fermé,
- un second moyen de tarage composé d'un second distributeur proportionnel 37 présentant trois orifices :
   o un premier orifice 371 relié à l'orifice d'entrée de la valve de freinage 2 ;
   o un deuxième orifice 372 relié à l'orifice de fuite de la valve de freinage 2 ;
   o un troisième orifice 373 relié une seconde entrée du clapet navette 38,
   ce second distributeur proportionnel 37 pouvant alterner entre :
   o une configuration de repos dans laquelle le premier orifice 231 est fermé tandis que le deuxième orifice 232 est relié au troisième orifice 233 ;
   o une configuration de tarage dans laquelle le premier orifice 371 et le second orifice 372 sont tous deux reliés au troisième orifice 373 via des limiteurs de débit,
   o une configuration de freinage dans laquelle le premier orifice 371 est relié au troisième orifice 373 tandis que le deuxième orifice 372 est fermé.

Le clapet navette 38 présente donc deux entrées reliées respectivement aux troisièmes orifices 273 et 373 des moyens de tarage, et une sortie, qui achemine la pression la plus élevée parmi les deux pressions d'entrée vers des moyens de tarage 28, typiquement un piston.

Chacun des moyens de tarage 27 et 37 est muni de moyens de pilotage afin de piloter la pression qu'ils délivrent. Dans le mode de réalisation représenté sur la figure 2, chacun des moyens de tarage 27 et 37 est muni d'une commande électrique variable 275 et 375 et d'un ressort de poussée 274 et 374 s'opposant aux commandes électriques 275 et 375.

En l'absence de commande appliquée aux moyens de tarage 27 et 37, ces derniers sont en configuration de freinage à leur pression de tarage maximale. Les moyens de tarage 27 et 37 tarent le distributeur d'alimentation 26 au moyen du moyen de tarage 28 à la pression de tarage maximale la plus élevée des deux, ce qui conduit donc à délivrer la pression de freinage autorisée maximale, au moyen de freinage 25, typiquement égale à 140 bar.

Les configurations de tarage des distributeurs proportionnels réalisent des ponts de limiteurs de débit, permettant d'obtenir une pression très stable, tout en étant extrêmement rapide pour répondre aux demandes de freinage appliquées via les commandes 275 et 375.

Le distributeur d'alimentation 26 est piloté via les moyens de tarage 28, auxquels s'opposent un ressort de rappel 264 et une ligne de recopie 33 venant prélever la pression au niveau du troisième orifice 263 du distributeur d'alimentation 26, cette ligne de recopie étant typiquement munie d'un limiteur de débit 34.

Le ressort de rappel 264 exerce une force négligeable par rapport aux forces résultant des moyens de tarage 28 et de la ligne de recopie 33, et assure uniquement le retour à la position de repos du distributeur d'alimentation 26 lorsqu'aucune pression n'est appliquée par les moyens de tarage 28.

Le distributeur d'alimentation 26 est ainsi à l'équilibre lorsque la pression au niveau de son troisième orifice 263 est égale à la pression appliquée par les moyens d'alimentation de pression 28, qui correspond à une pression de consigne. Il y a donc un rapport de 1 :1 entre la pression de tarage du distributeur d'alimentation 26 et la pression qu'il délivre à l'orifice de sortie de la valve de freinage 22, ce qui permet de ne pas amplifier les éventuelles imprécisions de l'alimentation en pression.

Les deux moyens de tarage 27 et 37 sont typiquement adaptés pour délivrer des gammes de pressions distinctes, l'un délivrant des basses pressions, et l'autre délivrant des hautes pressions. Par exemple, le premier moyen de tarage 27 est typiquement adapté pour réaliser un tarage fin et délivrer une pression de sortie comprise entre 0 et 20 bar, tandis que le second moyen de tarage 37 est typiquement adapté pour réaliser un tarage de manière à délivrer une pression de sortie allant de 0 à 140 bar.
Le distributeur proportionnel 27 est typiquement adapté pour délivrer une pression comprise entre 0 et 20 bar, et plus particulièrement une pression comprise entre 10 et 15 bar, par exemple 12.5 bar.
Ce distributeur proportionnel 23 peut ainsi typiquement être exploité dans sa plage optimale, par exemple dans le cas où sa plage de pression est de 0 à 20 bar et où il établit une pression de 12.5 bar, cette valeur se trouvant sensiblement au centre de sa plage de régulation. Un tarage fin d'une précision importante peut ainsi être obtenu, auquel vient s'ajouter ou se superposer un tarage plus important réalisé par le second distributeur proportionnel 37.

En fonctionnement, la pompe hydraulique 23 va alimenter la valve de freinage 22 en pression via son orifice d'entrée.
Les moyens de commande 275 et 375 sont pilotés indépendamment, et vont piloter les moyens de tarage 27 et 37 de manière à ce que chacun réalise un tarage donné permettant de délivrer une pression de freinage

Ce pilotage indépendant des deux moyens de tarage 27 et 37 permet de réaliser deux modes de fonctionnement distincts.

Dans un premier mode de fonctionnement, le premier moyen de tarage 27 reçoit une commande dès le relâchement du frein de parking, typiquement de manière à délivrer une pression constante comprise entre 10 et 15 bar, tandis que le second moyen de tarage recevra une commande en fonction de la pression de freinage requise, que l'on qualifiera de « seconde pression de tarage ». On réalise donc une commande indépendante des deux moyens de tarage.
Lorsque la seconde pression de tarage est inférieure à la pression constante délivrée via le premier moyen de tarage, c'est cette pression constante qui est appliquée au distributeur d'alimentation 26 via le clapet navette 38.
Une fois que la seconde pression de tarage est supérieure à la pression constante délivrée par le premier moyen de tarage, le clapet navette 38 ne conduit plus que cette seconde pression de tarage pour piloter le distributeur d'alimentation 26.

Dans un second mode de fonctionnement, les deux moyens de tarage sont commandés simultanément ; le premier moyen de tarage n'est plus activé systématiquement dès le relâchement du frein de parking, et il n'y a donc pas application systématique d'une valeur minimale de tarage constant au distributeur d'alimentation 26.

Ces deux modes de fonctionnement permettent notamment de satisfaire aux différentes normes de fonctionnement avec un unique circuit, sans nécessiter de modifications structurelles.
A titre d'exemple, le premier mode de fonctionnement peut être utilisé afin de répondre aux exigences de la norme Italienne, qui impose l'application d'une pression constante de l'ordre de 12.5 bar pour le relâchement du frein de parking d'un véhicule.
Le second mode de fonctionnement peut être utilisé pour les autres pays n'ayant pas une telle norme et ne nécessitant pas l'application d'une pression constante.

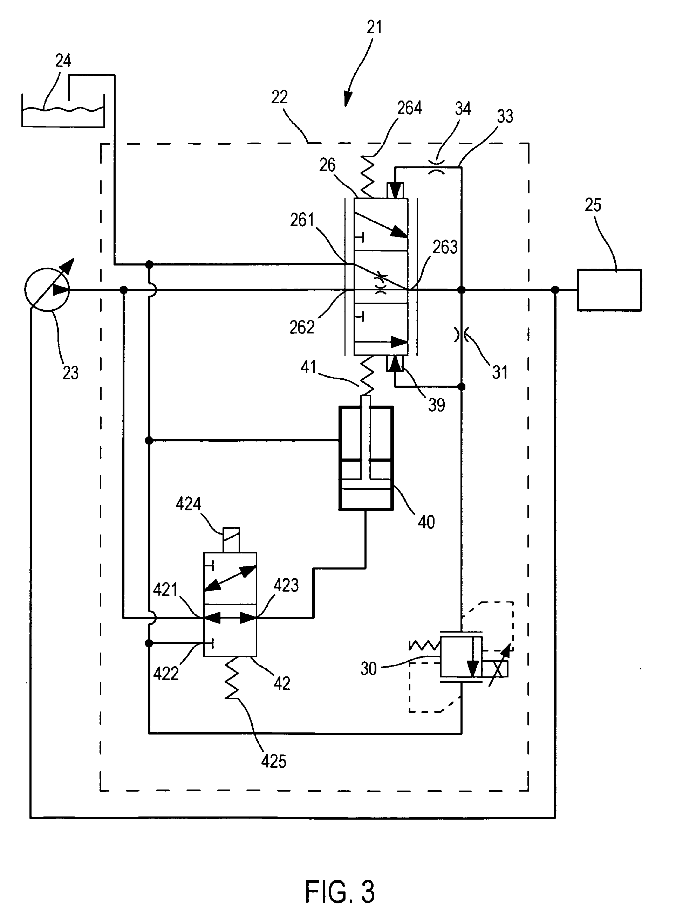

La figure 3 présente une variante du circuit hydraulique et de la valve présentés précédemment sur la figure 2.

Cette variante comprend un distributeur d'alimentation 26 tel que décrit précédemment, muni d'un ressort de rappel 264 et d'une ligne de recopie 33.

Il y a ici deux moyens de tarage 39 et 40 du tiroir du distributeur d'alimentation 26, dont les effets sur le distributeur d'alimentation 26 s'additionnent.
Dans le mode de réalisation représenté, les moyens de tarage 40 sont un vérin présentant deux chambres, l'une étant reliée à l'orifice de fuite, et l'autre étant reliée à un orifice 423 d'un commutateur on/off 42.
Ce vérin 40 est associé à un ressort 41 monté en série entre le vérin 40 et le distributeur d'alimentation 26.

Ce commutateur on/off 42 comprend :
- un premier orifice 421 relié à l'orifice d'entrée de la valve de freinage 2 ;
- un deuxième orifice 422 relié à l'orifice de fuite de la valve de freinage 2 ;
- un troisième orifice 423 relié au moyen de tarage 40.
Il peut alterner entre deux configurations :
- une configuration ON dans laquelle le premier orifice 421 est fermé tandis que le deuxième orifice 422 est relié au troisième orifice 423 ;
- une configuration OFF dans laquelle le premier orifice 421 est relié au troisième orifice 423 tandis que le deuxième orifice 422 est fermé.
Le commutateur on/off 42 est piloté par une commande électrique 424, à laquelle s'oppose un ressort de poussée 425. Par défaut, le ressort de poussée 424 maintient le commutateur on/off 42 en configuration OFF. Lorsqu'elle est alimentée, la commande électrique 424 fait basculer le commutateur on/off 42 en configuration ON.

Dans sa configuration OFF, le commutateur 42 conduit directement la pression délivrée par la pompe 23 au vérin 40, ce qui entraîne le distributeur d'alimentation 26 en configuration de freinage. Seul le ressort 41 exerce alors un tarage sur le distributeur d'alimentation 26, ce tarage étant alors typiquement compris entre 10 et 15 bar, par exemple égal à 12.5 bar, permettant ainsi de satisfaire aux normes nationales nécessitant l'application d'une telle pression de tarage constante.

Dans sa configuration ON, les deux chambres du vérin 40 sont reliées à l'orifice de fuite de la valve de freinage 22. Le ressort 41 n'est plus taré, et la pression au niveau de l'orifice de sortie est égale à la pression ambiante.

Dans cette variante, le rôle du premier moyen de tarage est donc tenu par le ressort 41, tandis que le second moyen de tarage est un limiteur de pression 30. Le ressort 41 est comprimé par le vérin 40, et exerce un tarage sur le distributeur d'alimentation 26.

Le limiteur de pression 30 est relié d'un côté à l'orifice de sortie de la valve de freinage 22 et de l'autre côté à son orifice de fuite ; il permet ainsi de délimiter une pression maximale au niveau du second moyen de tarage 39, le trop plein de pression étant évacué via l'orifice de fuite.

La liaison entre l'orifice de sortie de la valve de freinage 22 et le limiteur de pression 30 est munie d'un limiteur de débit 31 et d'une liaison vers le second moyen de tarage 39, disposée entre le limiteur de débit 31 et le limiteur de pression 30.

Le second moyen de tarage 39 peut prendre plusieurs formes, typiquement un piston hydraulique.
Le limiteur de débit 31 engendre une perte de charge dans la ligne allant de l'orifice de sortie au limiteur de pression 30 et au second moyen de tarage 39, typiquement comprise entre 10 et 15 bar, par exemple égale à 12.5 bar.
Le moyen de contrôle 30 présente typiquement une pression réglable entre 0 et 140 bar.

En fonctionnement, la pompe 23 vient alimenter en pression le vérin 40 via le commutateur 42 qui est en position OFF, ce qui réalise un tarage du distributeur d'alimentation et met permet ainsi de délivrer une pression au niveau de l'orifice de sortie de la valve de freinage 22.
Un débit s'établit alors au travers du limiteur de débit 31, tandis que le régulateur de pression 30 est ouvert, sans qu'une commande y soit appliquée. Le limiteur de débit 31 est typiquement choisi de manière à ce que le débit qui s'y établit soit suffisant pour obtenir une réponse rapide du régulateur de pression 30 sans le saturer, et à ne pas créer une chute de pression trop importante en sortie de la valve de freinage 22.
La pression au niveau de l'orifice de sortie de la valve de freinage 22 s'établit alors à l'effort de tarage réalisé par le ressort 41, typiquement à 12.5 bar.

Le circuit est alors prêt à fonctionner sous la forme d'un circuit suiveur, en réagissant à la pression de commande appliquée au régulateur de pression 30.

Le limiteur de pression 30 est piloté de manière à définir la pression de freinage souhaitée.
Cette pression de tarage exercée par le second moyen de tarage 39, qui est égale à la pression définie par le moyen de contrôle 30, est égale à la pression au niveau de l'orifice de sortie de la valve de freinage 22, à laquelle on soustrait les pertes de charge résultant du limiteur de débit 31.
Dans un mode de réalisation particulier, le limiteur de débit 31 est calibré de manière à ce que les pertes de charge qu'il engendre correspondent à l'effort de tarage réalisé par le ressort 41 sur le distributeur d'alimentation 26, typiquement 12.5 bar.

La pression de freinage est alors appliquée comme pression de tarage sur le distributeur d'alimentation 26 via les seconds moyens de tarage 39.
La pression de tarage appliquée au distributeur d'alimentation est ainsi égale à la somme des tarages appliqués par les premier et second moyens de tarage 41 et 39.

De la même manière que pour le circuit présenté sur la figure 2, un ressort de rappel 264 et une ligne de recopie 33 venant prélever la pression au niveau du troisième orifice 263 du distributeur d'alimentation 26, cette ligne de recopie étant typiquement munie d'un réducteur de débit 34, s'opposent au tarage réalisé par les moyens de tarage 39 et 41.
Le ressort de rappel 264 exerce une force négligeable par rapport aux forces résultant des moyens de tarage 39 et 41 et de la ligne de recopie 33, et assure uniquement le retour à la position de repos du distributeur d'alimentation 26 lorsqu'aucune pression n'est appliquée par les moyens de tarage 39 et 41.

Ainsi, le distributeur d'alimentation 26 est en position d'équilibre lorsque la pression au niveau de l'orifice de sortie et qui est transmise via la ligne de recopie est égale à la somme des pressions de tarage appliquées par les moyens de tarage 39 et 41.

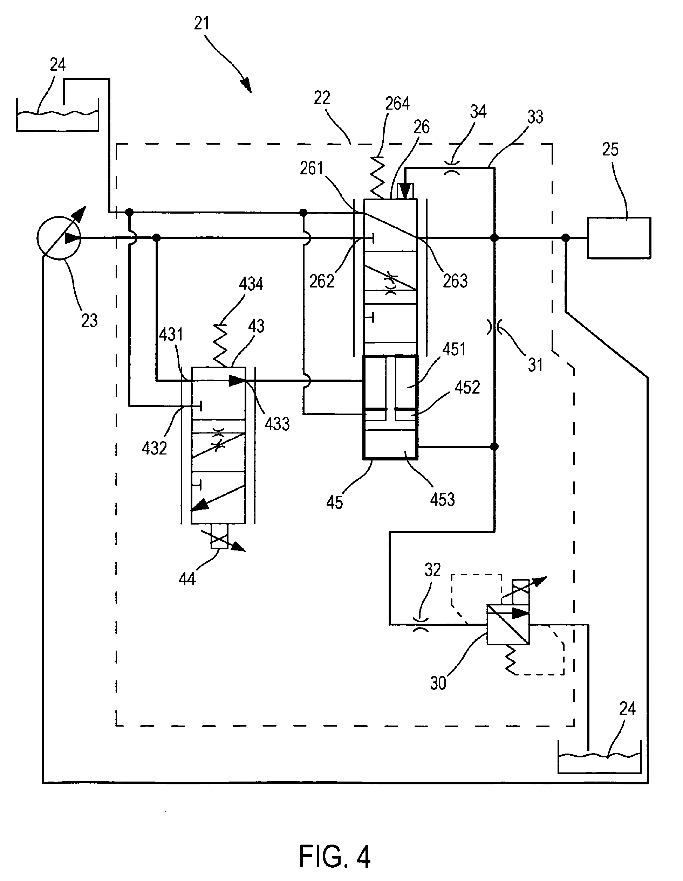

La figure 4 présente une autre variante du circuit hydraulique et de la valve présentés sur les figures précédentes.

Dans cette variante, les moyens de tarage agissant sur le distributeur d'alimentation 26 comprennent un vérin hydraulique 45 présentent trois chambres, respectivement 451, 452 et 453 et un piston entre les deuxième et troisième chambres.

Le circuit comprend un premier moyen de tarage 43 et un second moyen de tarage 30.
Le premier moyen de tarage 43 est un distributeur proportionnel présentant trois orifices 431, 432, et 433.
Le premier orifice 431 est relié à l'orifice d'entrée de la valve de freinage 22, le deuxième orifice 432 est relié à son orifice de fuite, et le troisième orifice 433 est relié à la première chambre 451 du vérin 45.

Le distributeur proportionnel 43 est piloté par une commande électrique 44 variable à laquelle s'oppose un ressort de rappel 434, et présente trois configurations :
- une configuration de repos dans laquelle le deuxième orifice 432 est fermé tandis que le premier orifice 431 est relié au troisième orifice 433 ;
- une configuration de tarage dans laquelle le premier orifice 431 et le second orifice 432 sont tous deux reliés au troisième orifice 433 via des limiteurs de débit de manière à piloter la pression transmise aux moyens de freinage 25,
- une configuration de défreinage dans laquelle le deuxième orifice 432 est relié au troisième orifice 433 tandis que le premier orifice 431 est fermé, la pression dans la chambre 451 étant alors égale à la pression ambiante du réservoir 24.

Le distributeur proportionnel 43 alimente ainsi en pression la première chambre 451 du moyen de tarage 45 proportionnellement à la commande électrique qui lui est appliquée via la commande 44.

Ce distributeur proportionnel 43 est typiquement adapté pour délivrer une pression comprise entre 0 et 20 bar, et plus particulièrement une pression comprise entre 10 et 15 bar, par exemple 12.5 bar.
Ce distributeur proportionnel 43 peut ainsi typiquement être exploité dans sa plage optimale, par exemple dans le cas où sa plage de pression est de 0 à 20 bar et où il établit une pression de 12.5 bar, cette valeur se trouvant sensiblement au centre de sa plage de régulation. Un tarage fin d'une précision importante peut ainsi être obtenu, auquel vient s'ajouter ou se superposer un tarage plus important réalisé par le moyen de tarage 30.

La deuxième chambre 452 du vérin 45 est reliée à l'orifice de fuite de la valve de freinage 22, et est ainsi typiquement reliée au réservoir sans pression 24.

Le second moyen de tarage 30 hydraulique est un limiteur de pression 30 similaire à celui présenté sur la figure 3.
De la même manière que sur la figure 3, la ligne reliant le limiteur de pression 30 et l'orifice de sortie de la valve de freinage 22 est munie d'un limiteur de débit 31, et une ligne de tarage prélève la pression entre ce limiteur de débit 31 et le limiteur de pression 30 pour l'acheminer vers la troisième chambre 453 du vérin 45.

Le premier limiteur de débit 31 est typiquement calibré pour produire une perte de charge à ses bornes sensiblement égale 12.5 bar.

Dans le mode de réalisation représenté, un limiteur de débit 32 optionnel se trouve entre la ligne de tarage et le limiteur de pression 30, et joue un rôle d'amortisseur.

Le fonctionnement de cette variante est similaire au fonctionnement de la variante présentée sur la figure 3.
Le distributeur proportionnel 43 et le régulateur de pression 30 vont chacun appliquer une pression respectivement dans la première 451 et la troisième chambre 453 du vérin 45, qui va ainsi réaliser un tarage du distributeur d'alimentation 26 correspondant à la somme des tarages réalisés par le distributeur proportionnel 43 et le limiteur de pression 30.

De la même manière que précédemment, la ligne de recopie 33 permet d'établir un équilibre du distributeur d'alimentation 26 lorsque la pression au niveau de l'orifice de sortie de la valve de freinage 22 est égale à la somme des pressions appliquées par le distributeur proportionnel 43 et le régulateur de pression 30 qui ont tous deux un rôle de moyen de tarage du distributeur d'alimentation 26.

Le moyen de contrôle 30 présente typiquement une pression réglable entre 0 et 140 bar.

En fonctionnement, lorsque la pompe hydraulique 23 alimente la valve de freinage 22, le distributeur proportionnel 43 établit une première pression de commande, typiquement de l'ordre de 12.5 bar, qui s'applique dans la chambre 451 du vérin 45.
Cette pression dans la première chambre 451 du vérin 45 réalise un premier tarage du distributeur d'alimentation 26, qui est alors en position de délivrer une pression au niveau de l'orifice de sortie de la valve de freinage 22 vers les moyens de freinage 25.

Un débit s'établit alors au travers du limiteur de débit 31, tandis que le régulateur de pression 30 est ouvert, sans qu'une commande y soit appliquée. Le limiteur de débit 31 est typiquement calibré pour établir une perte de charge égale à la première pression de commande, par exemple de l'ordre de 12.5 bar de manière à créer une mise en pression sensiblement nulle de la troisième chambre 453 du vérin 45. Il est choisi de manière à ce que le débit qui s'y établit soit suffisant pour obtenir une réponse rapide du régulateur de pression 30 sans le saturer, et à ne pas créer une chute de pression trop importante en sortie de la valve de freinage 22.
La pression au niveau de l'orifice de sortie de la valve de freinage 22 s'établit alors à la première pression de commande du distributeur proportionnel 43, typiquement à 12.5 bar.
Le circuit est alors prêt à fonctionner sous la forme d'un circuit suiveur, en réagissant à la pression de commande appliquée au régulateur de pression 30.
Lorsqu'on applique une pression de commande au régulateur de pression 30, ce dernier se ferme et provoque une montée en pression dans la troisième chambre 453 du vérin 45 jusqu'à atteindre la commande appliquée au régulateur de pression 30, qui vient s'ajouter à la pression établie dans la première chambre 451 pour réaliser le tarage du distributeur d'alimentation 26, et ainsi augmenter la pression en sortie de la valve de freinage 22.

En considérant que le premier moyen de tarage est piloté pour établir une pression P1, que le limiteur de débit 31 est calibré pour établir une différence de pression égale à cette pression P1, et que le second moyen de tarage est piloté pour établir une pression P2, alors la pression appliquée aux moyens de freinage sera égale à P2 + P1.
Dans le cas où P1 est non nulle et P2 est nulle ; la pression de freinage sera alors égale à P1.

A titre d'exemples non limitatifs :
- Pour P1 = 0 et P2 = 0, les moyens de freinage 25 se verront appliquer une pression nulle, ce qui correspond typiquement à une configuration dans laquelle un frein de parking est activé, et correspond typiquement à une configuration adaptée à la norme en vigueur en Italie.
- Pour P1 = 12.5 bar et P2 = 0, les moyens de freinage 25 se verront appliquer une pression égale à 12.5 bar, ce qui correspond typiquement à une configuration dans laquelle un frein de remorque est désactivé selon la norme en vigueur en Italie.
- Pour P1 = 12.5 bar, et P2 = 127.5 bar, la pression appliquée aux moyens de freinage 25 sera égale à P1 + P2 = 127.5 +12.5 = 140 bar.
- Pour P1 = 12.5 bar, et P2 = X bar, la pression appliquée aux moyens de freinage 25 sera égale à P1 + P2 = X+12,5 bar.

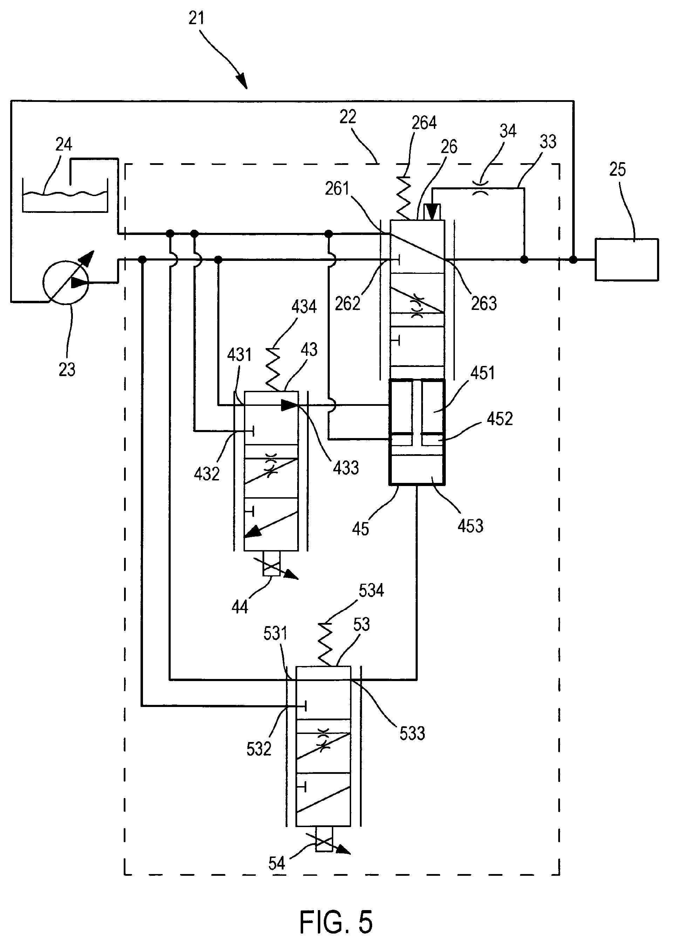

La figure 5 présente un autre mode de réalisation de circuit hydraulique comprenant une valve selon l'invention.

La structure de ce circuit hydraulique est similaire à celle du circuit présenté sur la figure 4, à l'exception du moyen de contrôle 30 qui est remplacé par un distributeur de contrôle 53 proportionnel.

Ce distributeur de contrôle 53 est similaire au distributeur proportionnel 43, et présente trois orifices 531, 532, et 533.
Le premier orifice 531 est relié à l'orifice de fuite de la valve de freinage 22, le deuxième orifice 532 est relié à son orifice d'entrée, et le troisième orifice 533 est relié à la troisième chambre 453 du vérin 45.

Ce distributeur de contrôle 53 est piloté par une commande électrique 54 variable à laquelle s'oppose un ressort de rappel 534, et présente trois configurations :
- une configuration de repos dans laquelle le premier orifice 531 est relié au troisième orifice 533 tandis que le deuxième orifice 532 est fermé ;
- une configuration de freinage dans laquelle le premier orifice 531 est fermé tandis que le deuxième orifice 532 est relié au troisième orifice 533 ;
- une configuration de tarage dans laquelle le premier orifice 531 et le second orifice 532 sont tous deux reliés au troisième orifice 533 via des limiteurs de débit.

A la différence des modes de réalisation précédents, la troisième chambre 453 est ici alimentée via le distributeur de contrôle 53 qui est disposé en amont du distributeur d'alimentation 26, contrairement au moyen de contrôle 30 représenté sur les figures 3 et 4 qui était disposé en aval du distributeur d'alimentation 26.
Il est ainsi possible d'appliquer une commande directement au distributeur de contrôle 53, sans réaliser un amorçage préalable du circuit via le distributeur proportionnel 43.

Dans ce mode de réalisation, le tarage de la pression au niveau de l'orifice de sortie de la valve de freinage par les moyens de tarage 45 peut être réalisé avec un ratio non égal à 1, dépendant notamment du distributeur de contrôle 53.
En variante, le tarage peut être réalisé avec deux ratios différents, par exemple un ratio égal à 1 pour le distributeur proportionnel 43, et un ratio distinct de 1 pour le distributeur de contrôle 53. Cette configuration permet d'obtenir un tarage précis pour le premier tarage typiquement égal à 12.5 bar, et un tarage présentant un niveau de précision légèrement moindre pour le second tarage typiquement compris entre 0 et 127.5 bar.

De la même manière que précédemment, les moyens de tarage, ici le piston 45, appliquent une pression de tarage au distributeur d'alimentation 26 égale à la somme des pressions dans les première et troisième chambres 451 et 453.
La pression de tarage appliquée au distributeur d'alimentation 26 est donc pilotée par les commandes 44 et 54.

La valve de freinage 22 selon l'invention permet donc de s'adapter facilement aux normes en vigueur dans les différents pays en pouvant appliquer deux tarages distincts et indépendants via deux moyens de tarage, et d'avoir une pression de tarage du distributeur d'alimentation 26 égale à la pression délivrée aux moyens de freinage via l'orifice de sortie de la valve de freinage 22, ce qui confère donc une grande stabilité de pression, qui est un élément de confort et de précision important pour obtenir un bon freinage sur un circuit comprenant une pompe asservie à la charge, une telle pompe étant par exemple fréquemment utilisée sur les machines agricoles ou de chantier.

## Revendications

1. Valve de freinage (22) hydraulique comprenant :
- un orifice d'entrée destiné à être relié à un moyen d'alimentation en pression (23),
- un orifice de sortie destiné à être relié à un moyen de freinage (25),
- un orifice de fuite destiné à être relié à un réservoir (24),
- un distributeur d'alimentation (26) adapté pour relier l'orifice d'entrée à l'orifice de sortie dans une configuration de freinage, et l'orifice de fuite à l'orifice de sortie dans une configuration de repos,
ladite valve de freinage (22) étant **caractérisée en ce que** le distributeur d'alimentation (26) est piloté par deux moyens de tarage pilotés indépendamment.

2. Valve de freinage (22) selon la revendication précédente, **caractérisée en ce que** lesdits moyens de tarage comprennent :
- un premier moyen de tarage réalisant un tarage pour une pression au niveau de l'orifice de sortie comprise entre 10 et 15 bar,
- un second moyen de tarage réalisant un tarage pour une pression au niveau de l'orifice de sortie comprise entre 0 et 140 bar.

3. Valve de freinage (22) selon l'une des revendications précédentes, **caractérisé en ce que** seul celui desdits moyens de tarage délivrant la pression de tarage la plus élevée pilote le distributeur d'alimentation (26).

4. Valve de freinage (22) selon l'une des revendications 1 ou 2, **caractérisé en ce que** le distributeur d'alimentation est piloté par une pression de tarage d'alimentation correspondant à la somme de la pression de tarage délivrée par le premier et le second moyen de tarage.

5. Valve de freinage (22) selon l'une des revendications précédentes, **caractérisée en ce que** lesdits premier et second moyens de tarage sont des réducteurs proportionnels montés en parallèle.

6. Valve de freinage (22) selon l'une des revendications 1 à 4, **caractérisée en ce que** le premier moyen de tarage est un réducteur proportionnel, et **en ce que** ledit second moyen de tarage est un limiteur de pression.

7. Valve de freinage (22) selon l'une des revendications 1 à 4, **caractérisée en ce que** le premier moyen de tarage est un ressort comprimé par un piston hydraulique, et **en ce que** ledit second moyen de tarage est un limiteur de pression.

8. Valve de freinage (22) selon l'une des revendications précédentes, **caractérisée en ce que** ledit tarage est réalisé avec un rapport de 1 :1 entre la pression de tarage du distributeur d'alimentation (26) et la pression de l'orifice de sortie.

9. Valve de freinage (22) selon la revendication 5, dans laquelle le premier moyen de tarage et le second moyen de tarage réalisent le tarage du distributeur d'alimentation (26) respectivement avec un ratio égal à 1 et avec un ratio différent de 1.

10. Circuit de freinage (21) hydraulique comprenant :
- une valve de freinage (22) selon l'une des revendications précédentes,
- une pompe (23) hydraulique délivrant une pression variable connectée à l'orifice d'entrée de ladite valve,
- un réservoir (24) à pression ambiante connecté à l'orifice de fuite de ladite valve,
- des moyens de freinage (25) hydrauliques connecté à l'orifice de sortie de ladite valve (22).

11. Véhicule équipé d'un circuit de freinage (21) selon la revendication précédente.

## Patentansprüche

1. Hydraulisches Bremsventil (22), umfassend:
- eine Einlassöffnung, die für die Verbindung mit einem Mittel zur Druckbeaufschlagung (23) bestimmt ist,
- eine Auslassöffnung, die für die Verbindung mit einem Bremsmittel (25) bestimmt ist,
- eine Entweichungsöffnung, die für die Verbindung mit einem Tank (24) bestimmt ist,
- einen Versorgungsverteiler (26), der dafür angepasst ist, die Einlassöffnung mit der Auslassöffnüng in einer Bremskonfiguration und die Entweichungsöffnung mit der Auslassöffnung in einer Ruhekonfiguration zu verbinden,
wobei das Bremsventil (22) **dadurch gekennzeichnet ist, dass** der Versorgungsverteiler (26) durch zwei Ausgleichsmittel, die unabhängig angesteuert werden, angesteuert wird.

2. Bremsventil (22) nach dem vorhergehenden Anspruch, **dadurch gekennzeichnet, dass** die Ausgleichsmittel Folgendes umfassen:
- ein erstes Ausgleichsmittel, das einen Ausgleich bei einem Druck im Bereich der Auslassöffnung durchführt, der zwischen 10 und 15 bar beträgt,
- ein zweites Ausgleichsmittel, das einen Ausgleich bei einem Druck im Bereich der Auslassöffnung durchführt, der zwischen 0 und 140 bar beträgt,

3. Bremsventil (22) nach einem der vorhergehenden Ansprüche, **dadurch gekennzeichnet, dass** nur dasjenige der Ausgleichsmittel, das den höchsten Ausgleichsdruck bereitstellt, den Versorgungsverteiler (26) ansteuert.

4. Bremsventil (22) nach einem der Ansprüche 1 oder 2, **dadurch gekennzeichnet, dass** der Versorgungsverteiler durch einen Ausgleichsversorgungsdruck angesteuert wird, welcher der Summe des Ausgleichsdrucks entspricht, der durch das erste und das zweite Ausgleichsmittel bereitgestellt wird.

5. Bremsventil (22) nach einem der vorhergehenden Ansprüche, **dadurch gekennzeichnet, dass** das erste und das zweite Ausgleichsmittel Proportionaldruckregler sind, die parallel montiert sind.

6. Bremsventil (22) nach einem der Ansprüche 1 bis 4, **dadurch gekennzeichnet, dass** das erste Ausgleichsmittel ein Proportionaldruckregler ist und dass das zweite Ausgleichsmittel ein Druckminderer ist.

7. Bremsventil (22) nach einem der Ansprüche 1 bis 4, **dadurch gekennzeichnet, dass** das erste Ausgleichsmittel eine Feder ist, die durch einen Hydraulikkolben zusammengedrückt wird, und dass das zweite Ausgleichsmittel ein Druckminderer ist.

8. Bremsventil (22) nach einem der vorhergehenden Ansprüche, **dadurch gekennzeichnet, dass** der Ausgleich mit einem Verhältnis zwischen dem Ausgleichsdruck des Versorgungsverteilers (26) und dem Druck der Auslassöffnung von 1:1 durchgeführt wird.

9. Bremsventil (22) nach Anspruch 5, bei dem das erste Ausgleichsmittel und das zweite Ausgleichsmittel den Ausgleich des Versorgungsverteilers (26) mit einem Verhältnis gleich 1 bzw. mit einem Verhältnis ungleich 1 durchführen.

10. Hydraulischer Bremskreislauf (21), umfassend
- ein Bremsventil (22) nach einem der vorhergehenden Ansprüche,
- eine hydraulische Pumpe (23), die einen variablen Druck bereitstellt und mit der Einlassöffnung des Ventils verbunden ist,
- einen Tank (24) unter Umgebungsdruck, der mit der Entweichungsöffnung des Ventils verbunden ist,
- hydraulische Bremsmittel (25), die mit der Auslassöffnung des Ventils (22) verbunden sind.

11. Fahrzeug, umfassend einen Bremskreislauf (21) nach dem vorhergehenden Anspruch.

## Claims

1. A hydraulic braking valve (22) comprising:
- an inlet orifice intended to be connected to a pressure supply means (23),
- an outlet orifice intended to be connected to a braking means (25),
- a leak orifice intended to be connected to a tank (24),
- a power distributor (26) adapted so as to connect the inlet orifice to the outlet orifice in a breaking configuration, and the leak orifice to the outlet orifice in a rest configuration,
said braking valve (22) being **characterized in that** the power distributor (26) is driven by two independently driven calibration means.

2. The braking valve (22) according to the preceding claim, **characterized in that** said calibration means comprise:
- a first calibration means achieving calibration for a pressure at the outlet orifice comprised between 10 and 15 bars,
- a second calibration means achieving calibration for a pressure at the outlet orifice comprised between 0 and 140 bars.

3. The braking valve (22) according to one of the preceding claims, **characterized in that** only the one of said calibration means delivering the highest calibration pressure drives the power distributor (26).

4. The braking valve (22) according to one of claims 1 or 2, **characterized in that** the power distributor is driven by a power calibration pressure corresponding to the sum of the calibration pressure delivered by the first and the second calibration means.

5. The braking valve (22) according to one of the preceding claims, **characterized in that** said first and second calibration means are proportional reducers mounted in parallel.

6. The braking valve (22) according to one of claims 1 to 4, **characterized in that** the first calibration means is a proportional reducer, and **in that** said calibration means is a pressure limiter.

7. The braking valve (22) according to one of claims 1 to 4, **characterized in that** the first calibration means is a spring compressed by a hydraulic piston, and **in that** the second calibration means is a pressure limiter.

8. The braking valve (22) according to one of the preceding claims, **characterized in that** said calibration is achieved with a 1:1 ratio between the calibration pressure of the power distributor (26) and the pressure of the outlet orifice.

9. The braking valve (22) according to claim 5, wherein the first calibration means and the second calibration means achieve calibration of the power distributor (26) with a ratio equal to 1 and with a ratio different from 1, respectively.

10. A hydraulic braking circuit (21) comprising:
- a braking valve (22) according to one of the preceding claims,
- a hydraulic pump (23) delivering variable pressure connected to the inlet orifice of said valve,
- a tank (24) at ambient pressure connected to the leak orifice of said valve,
- hydraulic braking means (25) connected to the outlet orifice of said valve (22).

11. A vehicle equipped with a braking circuit (21) according to the preceding claim.
